# EUROPÄISCHE PATENTSCHRIFT

(11) **EP 3 230 616 B1**
(45) Veröffentlichungstag und Bekanntmachung des Hinweises auf die Patenterteilung: **22.08.2018**
(21) Anmeldenummer: 15808558.9
(22) Anmeldetag: 04.12.2015
(51) Int. Cl.: F16F 1/18, F16F 1/368, F16F 1/373

(54) **FEDER FÜR EIN FAHRZEUG**
SPRING FOR A VEHICLE
RESSORT POUR UN VÉHICULE

(30) Priorität: 09.12.2014 AT 8842014
(43) Veröffentlichungstag der Anmeldung: 18.10.2017
(73) Patentinhaber: Hendrickson Commercial Vehicle Systems Europe GmbH, 8750 Judenburg (AT)
(72) Erfinder: MARTEAU-LORANT, Séverin, 25200 Grand-Charmont (FR); BROGLY, Sébastien, 90850 Essert (FR)
(74) Vertreter: Beer & Partner Patentanwälte KG
(86) Internationale Anmeldenummer: PCT/EP2015/078681
(87) Internationale Veröffentlichungsnummer: WO 2016/091752

(56) Entgegenhaltungen:
- WO-A1-96/27507
- DE-A1- 10 202 114
- DE-C- 198 411
- DE-C- 389 200
- FR-A- 653 291
- SU-A1- 1 597 460
- US-A- 509 069
- US-A- 1 398 578
- US-A- 4 667 921
- US-A1- 2007 145 656
- US-A1- 2011 127 753

## Beschreibung

Die Erfindung betrifft eine Verwendung einer Blattfeder im Zusammenhang mit einem Fahrzeug, mit einem Mittelbereich, der eine Krümmung mit einer ersten Krümmungsrichtung aufweist, sowie mit zwei Randbereichen, wobei im unbelasteten Zustand die Randbereiche jeweils eine Krümmung mit einer zweiten Krümmungsrichtung und Scheitelpunkte aufweisen, wobei die zweite Krümmungsrichtung der ersten Krümmungsrichtung entgegengesetzt ist, wobei die Blattfeder eine durch die Scheitelpunkte der Krümmungen der Randbereiche verlaufende Scheitelpunktachse aufweist, wobei Endbereiche der Randbereiche von der Scheitelpunktachse weg hin zu der Seite der Scheitelpunktachse geneigt sind, auf welcher sich der Mittelbereich befindet, wobei sich die Scheitelpunktachse im eingebauten Zustand oberhalb des Mittelbereiches befindet und wobei die Blattfeder einteilig ausgeführt ist
Gattungsbildenden Stand der Technik bildet die WO 96/27507 A1. Im Fahrzeugbau ist es bekannt, die Räder und die Karosserie eines Fahrzeuges gegeneinander zu federn. Insbesondere bei besonders großen und schweren Fahrzeugen werden hierfür Blattfedern verwendet, da durch eine einfache Bauweise ein breites Spektrum von Belastungsanforderungen abgedeckt wird. Weiters können Blattfedern einfach gewartet und im Falle eines Gebrechens wieder einfach in Stand gesetzt werden. Es ist aus dem Stand der Technik bekannt, Blattfedern zweiteilig auszuführen, wobei ein erster Teil eher geringere Kräfte aufnimmt, beispielsweise bei Betrieb ohne oder mit geringer Beladung, und ein zweiter Teil unterstützend wirkt, beispielsweise bei schwerer Beladung des mit der Blattfeder ausgestatteten Fahrzeugs. Durch diese Kombination von zwei Teilen wird eine günstige Veränderung der Federkennlinie erzielt. Allerdings ist der Übergang sprunghaft, wenn der zweite Federteil wirksam wird, was sich negativ auf die Fahreigenschaften eines Fahrzeuges auswirkt, das mit einer solchen zweiteiligen Federung ausgestattet ist. Die Federkennlinie weist eine Knickstelle auf, welche sich insbesondere auf die Fahreigenschaften des Fahrzeuges nachteilig auswirkt.
Weiters haben solche zweiteiligen Blattfedern ein sehr viel höheres Gewicht als einteilige Ausführungsformen, was sich nachteilig auf den Energieverbrauch eines Fahrzeuges auswirkt, das mit einer solchen Federung ausgestattet ist. Außerdem steigt das Gesamtgewicht des Fahrzeuges, wodurch die höchst zulässige Zuladung sinkt.
Um den Übergang weicher zu gestalten, ist es aus dem Stand der Technik bekannt, statt einer zweiteiligen Bauweise der Blattfeder eine mehrteilige zu verwenden. Dadurch wird aber zum einen keine tatsächlich progressive Federkennlinie erreicht. Zum anderen werden die bekannten Probleme, welche sich durch ein hohes Eigengewicht der Feder ergeben, verstärkt.
Der Erfindung liegt daher die Aufgabe zu Grunde, die oben beschrieben Nachteile zu überwinden.
Gelöst wird diese Aufgabe erfindungsgemäß dadurch, dass ein am Mittelbereich angreifender Kraftvektor zur Scheitelpunktachse hin gerichtet ist und an den Endbereichen angreifende Kraftvektoren in die entgegengesetzte Richtung gerichtet sind und dass die Endbereiche jeweils ein Mittel zum Verbinden der Blattfeder mit einem Fahrgestell eines Fahrzeuges aufweisen.

Durch die beschriebene Verwendung der Feder ergeben sich verschiedene Vorteile:
Eine erfindungsgemäß verwendete Blattfeder kann eine stark nichtlineare, insbesondere progressive, Kennlinie haben, was sich positiv auf die Fahreigenschaften eines Fahrzeuges auswirkt, das mit einer erfindungsgemäßen Federung ausgestattet ist.

Weiters kann bei einer einteiligen Ausführung der Blattfeder Material und Gewicht der Gesamtfederung gespart werden, was sowohl die Fertigung kostengünstiger macht, als auch das Gesamtgewicht des Fahrzeugs verringert.

Bewirkt wird dies durch die funktionelle Verkürzung der wirksamen Länge der Blattfeder bei steigender Belastung.

In einer besonders bevorzugten Ausführungsform der Erfindung ist vorgesehen, dass die Randbereiche symmetrisch zueinander geformt sind. Damit kann die auf die Blattfeder wirkende Kraft gleichmäßig aufgenommen werden. Alternativ dazu kann vorgesehen sein, dass die Randbereiche asymmetrisch zueinander geformt sind. Somit kann die Blattfeder auf vorgegebene Bedingungen, wie zum Beispiel unterschiedlich ausgestaltete Fahrgestelle, vorteilhaft ausgelegt werden.

Weiters ist es im Rahmen der Erfindung bevorzugt, wenn die erfindungsgemäße Feder Federstahl und/oder Verbundwerkstoff enthält. Der Verbundwerkstoff kann Glasfasern aufweisen, die vorzugsweise als Verstärkungselemente in den Kunststoff des Verbundwerkstoffes eingebettet sind. Zusätzlich oder alternativ dazu kann der Verbundwerkstoff duroplastisches Harz oder thermoplastisches Harz aufweisen. Insbesondere kann vorgesehen sein, dass der Verbundwerkstoff Polyurethan und/oder Polyamid und/oder Polyester aufweist.

Insbesondere ist es bevorzugt, wenn an der Oberfläche der Feder Fasern, insbesondere Glasfasern, angeordnet sind, die im Wesentlichen parallel zur Scheitelpunktachse, insbesondere von einem Randbereich zum gegenüberliegenden Randbereich, verlaufen. Somit ist die Blattfeder trotz ihres vergleichsweise geringen Gewichtes weiter verstärkt.

In einer bevorzugten Ausführungsform ist vorgesehen, dass wenigstens ein Endbereich um einen Winkel α von der Scheitelpunktachse weg hin zu der Seite der Scheitelpunktachse geneigt ist, auf welcher sich der Mittelbereich befindet, wobei der Winkel α im Bereich von 1° bis 135°, bevorzugt im Bereich von 10° bis 90°, besonders bevorzugt im Bereich 20° bis 60° liegt, insbesondere 45° beträgt.

Weitere bevorzugte Ausführungsformen der Erfindung sind Gegenstand der übrigen Unteransprüche.

Nachstehend sind bevorzugte Ausführungsbeispiele der Erfindung anhand der Zeichnungen näher beschrieben. Es zeigt:
- Fig. 1 und 2: eine zweiteilige Blattfeder gemäß Stand der Technik in unterschiedlichen Belastungszuständen,
- Fig. 3: die Federkennlinie der Blattfeder gemäß den Fig. 1 und 2,
- Fig. 4: eine Ausführungsform einer erfindungsgemäßen, einteiligen Blattfeder,
- Fig. 5 bis 14: die Blattfeder gemäß Fig. 4 in unterschiedlichen Belastungszuständen,
- Fig. 15: die Federkennlinie der Blattfeder gemäß den Fig. 10 bis 14,
- Fig. 16: eine Verwendungsform der Blattfeder gemäß den Fig. 4 bis 14 und
- Fig. 17: eine weitere Ausführungsform einer erfindungsgemäßen, einteiligen Blattfeder.

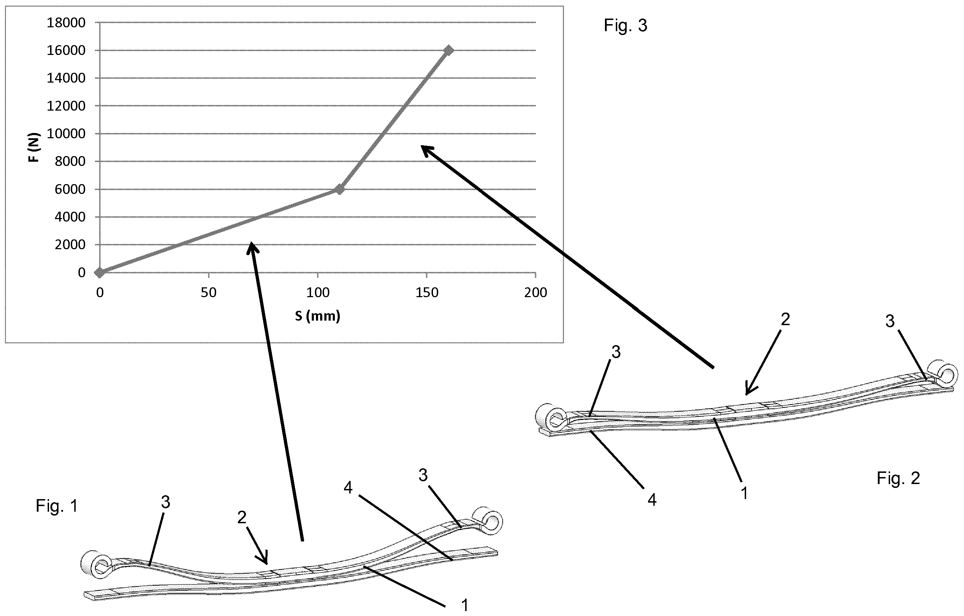

In den Fig. 1 und 2 ist eine aus dem Stand der Technik bekannte zweiteilige Blattfeder in unterschiedlichen Belastungszuständen gezeigt. Fig. 1 entspricht einem im Wesentlichen unbelasteten Zustand. Die in Fig. 2 dargestellte Verformung der Blattfeder 5 entspricht einem belasteten Zustand, in welchem das Fahrzeug beladen ist.

Die bekannte Blattfeder umfasst einen ersten Federteil 1 mit einem Mittelbereich 2 und zwei Randbereichen 3. Der erste Federteil 1 ist in seinem Mittelbereich 2 an einem zweiten Federteil 4 angeordnet. Im unbelastetem Zustand sind die Randbereiche 3 vom zweiten Federteil 4 beabstandet. Bei steigender Belastung nähern sich die beiden Randbereiche 3 dem zweiten Federteil 4 an, bis sie am zweiten Federteil 4 anliegen. Bis zu dem Punkt, an dem die Randbereiche 3 am zweiten Federteil 4 anliegen, hat die Blattfeder eine relativ flach verlaufende, annähernd lineare Federkennlinie, wie in Fig. 3 dargestellt. Die Federkennlinie zeigt den Zusammenhang zwischen Verformung (Weg) der Blattfeder und einer auf die Blattfeder wirkenden Kraft. Bei weiterer, steigender Belastung verformen sich der erste Federteil 2 und der zweite Federteil 4 gemeinsam. Ab diesem Punkt hat die Blattfeder eine steiler verlaufende, wiederum annähernd lineare Federkennlinie. Die Federkennlinie weist eine Knickstelle auf, welche sich insbesondere auf die Fahreigenschaften des Fahrzeuges nachteilig auswirkt. Der Übergang von einer "weichen" Federung zu einer "harten" Federung ist dabei sprunghaft. Die Federrate nimmt diskontinuierlich mit steigender Belastung zu. Um den Übergang weicher zu gestalten, ist es aus dem Stand der Technik bekannt, statt einer zweiteiligen Bauweise der Blattfeder eine mehrteilige (beispielsweise drei- oder vierteilige) zu verwenden. Dadurch wird aber zum einen keine wirklich progressive Federkennlinie erreicht. Zum anderen werden die bekannten Probleme durch ein hohes Eigengewicht der Feder verstärkt.

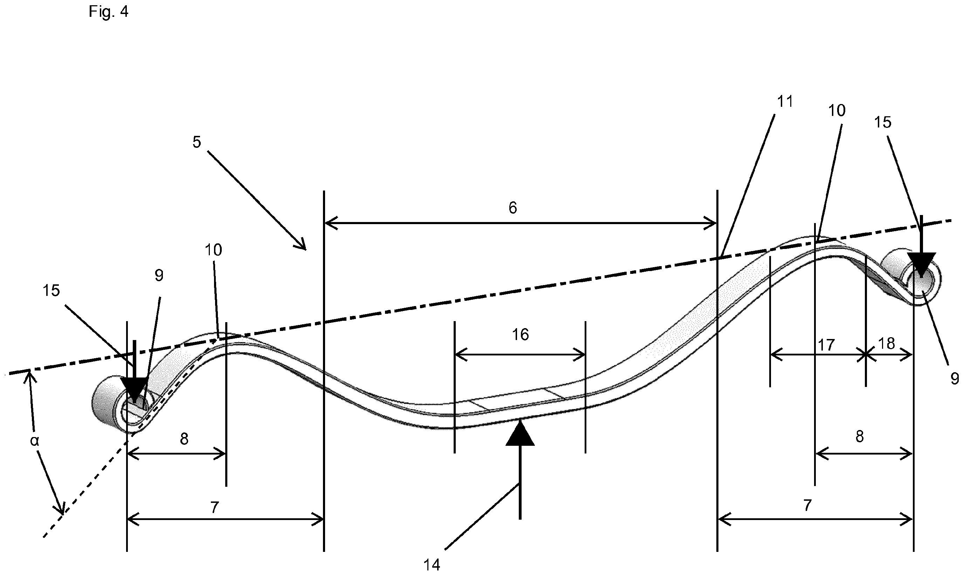

In Fig. 4 ist eine Ausführungsform einer erfindungsgemäßen, einteiligen Blattfeder 5 dargestellt. Die Blattfeder 5 hat einen Mittelbereich 6, der eine Krümmung mit einer ersten Krümmungsrichtung aufweist, sowie zwei Randbereiche 7 mit jeweils einem Endbereich 8. Der Mittelbereich 6 weist dabei einen im Wesentlichen gerade verlaufenden Basisbereich 16 auf.

Im unbelasteten Zustand weisen die Randbereiche 7 jeweils eine Krümmung mit einer zweiten Krümmungsrichtung und Scheitelpunkten 10 auf, wobei die zweite Krümmungsrichtung der ersten Krümmungsrichtung entgegengesetzt ist. Die Feder 5 weist eine durch die Scheitelpunkte 10 der Krümmungen der Randbereiche 7 verlaufende, virtuelle Scheitelpunktachse 11 auf, wobei die Endbereiche 8 der Randbereiche 7 von der Scheitelpunktachse 11 weg hin zu der Seite der Scheitelpunktachse 11 geneigt sind, auf welcher sich der Mittelbereich 6 befindet. In der dargestellten Ausführungsform sind die Endbereiche 8 in einem Winkel α von im Wesentlichen 45° zur Scheitelpunktachse 11 geneigt. Die Endbereiche 8 weisen dabei einen gekrümmten Abschnitt 17 und einen im Wesentlichen geraden Endabschnitt 18 auf.

Die Endbereiche 8 weisen jeweils ein Mittel 9 zum Verbinden der Blattfeder 5 mit einem Fahrgestell eines Fahrzeuges auf, wobei diese Mittel 9 im gezeigten Ausführungsbeispiel gerollte Augen sind. Bei der erfindungsgemäßen Blattfeder 5 können auch andere Mittel 9 zum Verbinden der Blattfeder 5 mit dem Fahrgestell eines Fahrzeuges vorgesehen sein. Je nach Art der Blattfeder 5 können beide Mittel 9 ein Auge sein. Es kann auch ein Mittel 9 ein gerolltes oder angeformtes, z.B. ein im Endbereich 8 eingebrachtes, Auge sein, wogegen der andere Endbereich 8 im Wesentlichen flach verlaufen kann.

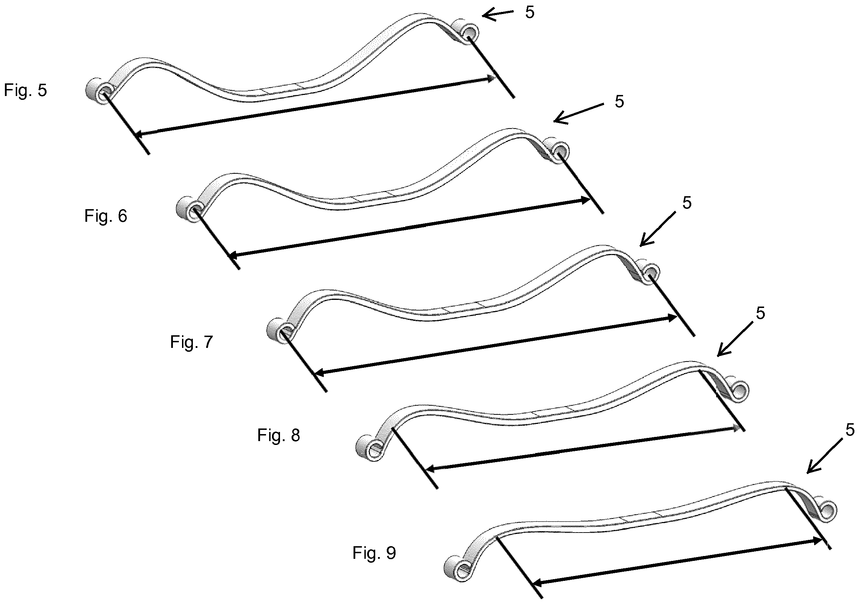

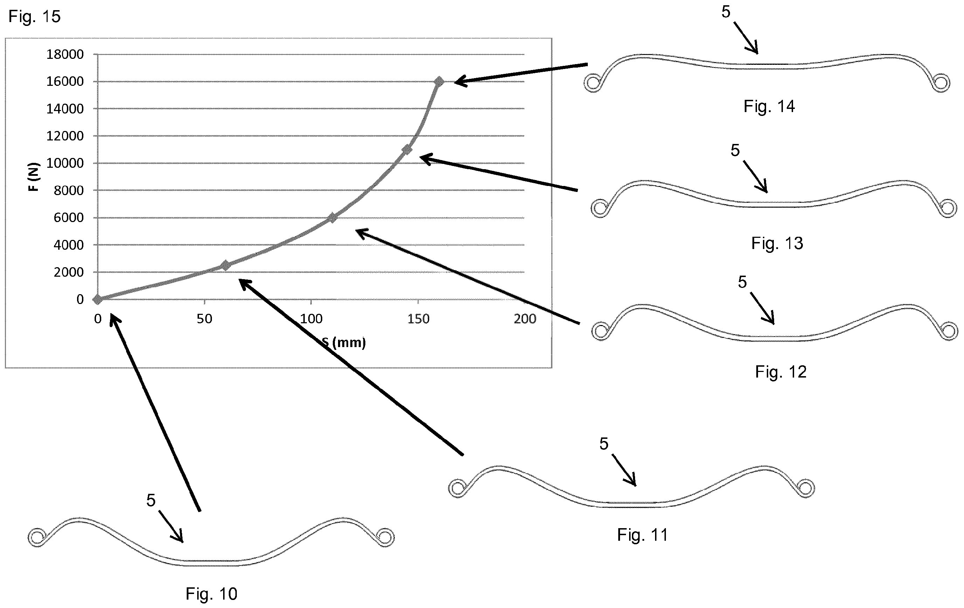

Fig. 5 bis 9 zeigen, wie die Blattfeder 5 ausgehend von Fig. 5 hin zu Fig. 9 bei steigender Belastung verformt wird. Es ist eine wirksame Länge 12 der Blattfeder 5 eingezeichnet, die ausgehend von Fig. 5 bis zur Fig. 9 kürzer wird, was zu einer erhöhten Steigung der Federkennlinie (Fig. 15) also zu einer steigenden Federrate führt.

In Fig. 5 ist die Blattfeder 5 in einem im Wesentlichen unbelasteten Zustand dargestellt, wobei die wirksame Länge 12 der Blattfeder 5 im Wesentlichen die Länge der Blattfeder 5 hat, da die Blattfeder 5 bei Belastung über die gesamte Länge in nennenswertem Ausmaß federt. Bei steigender Belastung neigen sich die Randbereiche 8 stärker zum Mittelbereich 6, d.h. die Randbereiche 8 neigen sich stärker von der Scheitelpunktachse 11 weg. Durch den bezüglich der Längsrichtung des Endbereiches in kleinerem Winkel dort angreifenden Kraftvektor wir das Biegemoment im Randbereich kleiner, sodass die Randbereiche 8 weniger federn.

Dadurch verkürzt sich die wirksame Länge 12 der Blattfeder 5, bis diese in dem in Fig. 9 dargestellten Zustand nur noch die Länge der Strecke zwischen den Scheitelpunkten 10 hat. Durch die Verkürzung der wirksamen Länge 12 der Blattfeder 5 in Zusammenhang mit der steigenden Belastung entsteht eine progressive Federkennlinie. Die Federrate nimmt also kontinuierlich mit steigender Belastung und abhängig von dieser zu.

Weiters sind in der Federkennlinie von Fig. 15 verschiedene Punkte markiert, welche bestimmten Belastungszuständen entsprechen. Diesen Belastungszuständen ist eine entsprechend ge- bzw. verformte Blattfeder 5 gemäß den Fig. 10 bis 14 zugeordnet, wobei die Belastungszustände gemäß den Fig. 10 bis 14 den Darstellungen der Belastungszustände der Blattfeder 5 gemäß den Fig. 5 bis 9 entsprechen.

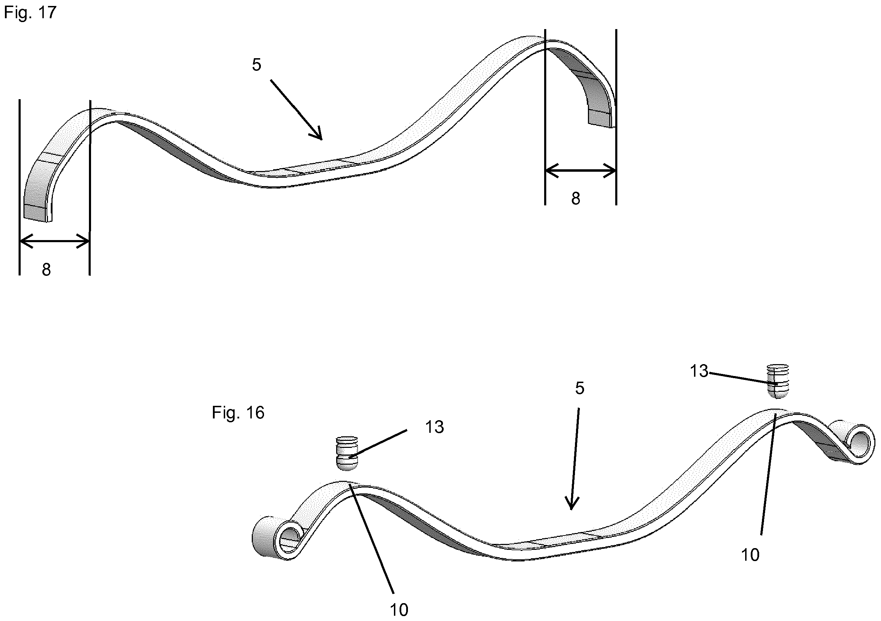

In Fig. 16 ist eine Verwendungsform einer erfindungsgemäßen Blattfeder 5 gezeigt, wobei angedeutet ist, dass den Bereichen der Scheitelpunkte 10 Anschlagpuffer 13 zugeordnet sind.
Fig. 17 zeigt eine Ausführungsform einer erfindungsgemäßen Blattfeder 5, bei welcher die Mittel zum Verbinden der Blattfeder 5 mit dem Fahrgestell eines Fahrzeuges keine gerollten Augen 9 sind. Vielmehr ist bei dieser Ausführungsform vorgesehen, die Blattfeder 5 fix mit dem Fahrgestell zu verbinden. Dies kann mit oder ohne Zwischenstück zum Beispiel durch Schweißen und/oder mittels Bolzen erfolgen.
Alle gezeigten Ausführungsformen von erfindungsgemäßen Blattfedern 5 haben gemeinsam, dass ein am Mittelbereich 6 angreifender Kraftvektor 14 (Fig. 4) zur Scheitelpunktachse 11 hin gerichtet ist und an den Endbereichen 8 angreifende Kraftvektoren 15 in die entgegengesetzte Richtung gerichtet sind.

## Patentansprüche

1. Verwendung einer Blattfeder (5) im Zusammenhang mit einem Fahrzeug, mit einem Mittelbereich (6), der eine Krümmung mit einer ersten Krümmungsrichtung aufweist, sowie mit zwei Randbereichen (7), wobei im unbelasteten Zustand die Randbereiche (7) jeweils eine Krümmung mit einer zweiten Krümmungsrichtung und Scheitelpunkte (10) aufweisen, wobei die zweite Krümmungsrichtung der ersten Krümmungsrichtung entgegengesetzt ist, wobei die Blattfeder (5) eine durch die Scheitelpunkte (10) der Krümmungen der Randbereiche (7) verlaufende Scheitelpunktachse (11) aufweist, wobei Endbereiche (8) der Randbereiche (7) von der Scheitelpunktachse (11) weg hin zu der Seite der Scheitelpunktachse (11) geneigt sind, auf welcher sich der Mittelbereich (6) befindet, wobei sich die Scheitelpunktachse (11) im eingebauten Zustand oberhalb des Mittelbereiches (6) befindet und wobei die Blattfeder (5) einteilig ausgeführt ist, **dadurch gekennzeichnet, dass** ein am Mittelbereich (6) angreifender Kraftvektor (14) zur Scheitelpunktachse (11) hin gerichtet ist und an den Endbereichen (8) angreifende Kraftvektoren (15) in die entgegengesetzte Richtung gerichtet sind und dass die Endbereiche (8) jeweils ein Mittel (9) zum Verbinden der Blattfeder (5) mit einem Fahrgestell eines Fahrzeuges aufweisen.

2. Verwendung einer Blattfeder nach Anspruch 1, **dadurch gekennzeichnet, dass** die Randbereiche (7) symmetrisch oder asymmetrisch zueinander geformt sind.

3. Verwendung einer Blattfeder nach Anspruch 1 oder 2, **dadurch gekennzeichnet, dass** die Feder Federstahl und/oder Verbundwerkstoff enthält.

4. Verwendung einer Blattfeder nach Anspruch 3, **dadurch gekennzeichnet, dass** der Verbundwerkstoff Glasfasern aufweist, die vorzugsweise als Verstärkungselemente in den Kunststoff des Verbundwerkstoffes eingebettet sind.

5. Verwendung einer Blattfeder nach Anspruch 3 oder 4, **dadurch gekennzeichnet, dass** der Verbundwerkstoff duroplastisches Harz oder thermoplastisches Harz aufweist.

6. Verwendung einer Blattfeder nach Anspruch 5, **dadurch gekennzeichnet, dass** der Verbundwerkstoff Polyurethan und/oder Polyamid und/oder Polyester aufweist.

7. Verwendung einer Blattfeder nach einem der Ansprüche 1 bis 6, **dadurch gekennzeichnet, dass** an der Oberfläche der Blattfeder (5) Fasern, insbesondere Glasfasern, angeordnet sind, die im Wesentlichen parallel zur Scheitelpunktachse (11), insbesondere von einem Randbereich (7) zum gegenüberliegenden Randbereich (7), verlaufen.

8. Verwendung einer Blattfeder nach einem der Ansprüche 1 bis 7, **dadurch gekennzeichnet, dass** wenigstens ein Endbereich (8) um einen Winkel (α) von der Scheitelpunktachse (11) weg hin zu der Seite der Scheitelpunktachse (11) geneigt ist, auf welcher sich der Mittelbereich (6) befindet, wobei der Winkel (α) im Bereich von 1° bis 135°, bevorzugt im Bereich von 10° bis 90°, besonders bevorzugt im Bereich 20° bis 60° liegt, insbesondere 45° beträgt.

## Claims

1. Use of a flat spring (5), in connection with a vehicle, with a middle region (6) which has a curve with a first curve direction, as well as two edge regions (7), wherein in an unladen state, the edge regions (7) each have a curve with a second curve direction and vertices (10), with the second direction of curve being opposed to the first direction of curve, wherein the flat spring (5) has a vertex axis (11) running through the vertices (10) of the curves of the edge regions (7), wherein that end regions (8) of the edge regions (7) are tilted away from the vertex axis (11) toward the side of the vertex axis (11) on which the middle region (6) lies, wherein the vertex axis (11) lies above the middle region (6) in an assembled state and wherein the spring is a one-piece flat spring (5), **characterized in that** a force vector (14) applied to the middle region (6) is oriented toward the vertex axis (11), and force vectors applied to the end regions (8) point in the opposite direction and **in that** the end regions (8) each display a device (9) for connecting the flat spring (5) with a chassis of a vehicle.

2. Use of a spring according to claim 1, **characterized in that** the edge regions (7) are shaped symmetrically or asymmetrically with regard to one another.

3. Use of a spring according to claim 1 or 2, **characterized in that** it contains spring steel and/or composite material.

4. Use of a spring according to claim 3, **characterized in that** the composite material features glass fibers, which are preferably embedded in the synthetic material of the composite material as reinforcing elements.

5. Use of a spring according to claim 3 or 4, **characterized in that** the composite material includes thermosetting resin or thermoplastic resin.

6. Use of a spring according to claim 5, **characterized in that** the composite material features polyurethane and/or polyamide and/or polyester.

7. Use of a spring according to one of claims 1 to 6, **characterized in that** fibers, in particular glass fibers, are arranged on the surface of the flat spring (5), which run essentially parallel to the vertex axis (11), in particular from one edge region (7) to the opposite edge region (7).

8. Use of a spring according to one of claims 1 to 7, **characterized in that** at least one end region (8) is tilted by an angle (α) away from the vertex axis (11) toward the side of the vertex axis (11), on which the middle region (6) lies, with the angle (α) lying between 1° and 135°, preferably in the range of 10° to 90°, especially preferably in the range of 20° to 60°, in particular 45°.

## Revendications

1. Utilisation d'un ressort à lames (5) en relation avec un véhicule, avec une partie médiane (6) qui présente une courbure dans un premier sens de courbure et avec deux parties de bord (7), lesquelles parties de bord (7) présentent chacune, dans l'état sans charge, une courbure dans un deuxième sens de courbure et des points de sommet (10), le deuxième sens de courbure étant opposé au premier sens de courbure, le ressort à lames (5) présentant un axe de sommet (11) qui passe par les points de sommet (10) des courbures des parties de bord (7), des parties d'extrémité (8) des parties de bord (7) étant inclinées pour s'écarter de l'axe de sommet (11) vers le côté de l'axe de sommet (11) sur lequel se trouve la partie médiane (6), l'axe de sommet (11) se trouvant au-dessus de la partie médiane (6) dans l'état assemblé et le ressort à lames (5) étant réalisé d'une pièce, **caractérisée en ce qu'**un vecteur de force (14) agissant sur la partie médiane (6) est dirigé vers l'axe de sommet (11) et des vecteurs de force (15) agissant sur les parties d'extrémité (8) sont dirigés en sens inverse, et **en ce que** les parties d'extrémité (8) présentent chacune un moyen (9) pour relier le ressort à lames (5) à un châssis d'un véhicule.

2. Utilisation d'un ressort à lames selon la revendication 1, **caractérisée en ce que** les parties de bord (7) ont une forme symétrique ou asymétrique l'une par rapport à l'autre.

3. Utilisation d'un ressort à lames selon la revendication 1 ou 2, **caractérisée en ce que** le ressort contient de l'acier à ressorts et/ou un matériau composite.

4. Utilisation d'un ressort à lames selon la revendication 3, **caractérisée en ce que** le matériau composite contient des fibres de verre qui sont de préférence intégrées pour servir d'éléments de renfort dans la matière synthétique du matériau composite.

5. Utilisation d'un ressort à lames selon la revendication 3 ou 4, **caractérisée en ce que** le matériau composite contient une résine thermodurcissable ou une résine thermoplastique.

6. Utilisation d'un ressort à lames selon la revendication 5, **caractérisée en ce que** le matériau composite contient du polyuréthane et/ou du polyamide et/ou du polyester.

7. Utilisation d'un ressort à lames selon l'une des revendications 1 à 6, **caractérisée en ce que** sont disposées sur la surface du ressort à lames (5) des fibres, en particulier des fibres de verre, qui sont orientées de façon sensiblement parallèle à l'axe de sommet (11), en particulier d'une partie de bord (7) à la partie de bord (7) opposée.

8. Utilisation d'un ressort à lames selon l'une des revendications 1 à 7, **caractérisée en ce qu'**au moins une partie d'extrémité (8) s'écarte selon un angle (α) de l'axe de sommet (11) vers le côté de l'axe de sommet (11) sur lequel se trouve la partie médiane (6), l'angle (α) étant compris entre 1° et 135°, de préférence entre 10° et 90°, en particulier entre 20° et 60° et étant en particulier égal à 45°.
